# EUROPEAN PATENT APPLICATION

(11) **EP 1 511 191 A1**
(43) Date of publication of application: **02.03.2005**
(21) Application number: 03730684.2
(22) Date of filing: 29.05.2003
(51) Int. Cl.: H04B 7/26, H04Q 7/20, H04L 12/28

(54) **DATA DISTRIBUTION DEVICE AND TRANSMISSION METHOD**

(30) Priority: 31.05.2002 JP 2002160611; 30.09.2002 JP 2002286007
(71) Applicant: MATSUSHITA ELECTRIC INDUSTRIAL CO., LTD., Kadoma-shi, Osaka 571-8501 (JP)
(72) Inventor: EBIKO, Keisuke, Yokosuka-shi, Kanagawa 239-0807 (JP); UESUGI, Mitsuru, Yokosuka-shi, Kanagawa 238-0048 (JP); YOSHII, Isamu, Urayasu-shi, Chiba 279-0014 (JP); MIYOSHI, Kenichi, Yokohama-shi, Kanagawa 236-0058 (JP); AOYAMA, Takahisa, Yokohama-shi, Kanagawa 233-0007 (JP)
(74) Representative: Grünecker, Kinkeldey, Stockmair & Schwanhäusser Anwaltssozietät
(86) International application number: PCT/JP2003/006721
(87) International publication number: WO 2003/103188

(57) **Abstract**

A server (191) transmits image information consisting of basic data and complementary data to a router (100) through the Internet (192). The router (100) allocates the basic data to a BS (110) of a cellular system (193) and the complementary data to an AP (120) of a wireless LAN system (194). The BS (110) transmits the basic data to a MS (150) and the AP (120) transmits the complementary data to the MS (150). When the MS (150) is located in the area of the cellular system (193), the MS always maintains a communication channel with the BS (110) and when the MS enters the area of the wireless LAN system (194), the MS also opens a channel with the AP (120) while maintaining the channel with the BS (110) . This allows the user to continue seamless communication.

## Description

### Technical Field

The present invention relates to a data allocation apparatus mounted in a communication system which integrates a cellular system, wireless LAN system, etc. and a transmission method.

### Background Art

The mainstream in a fourth-generation mobile communication system in the future is a system that allows a mobile station to freely carry out handover between two systems; a cellular system having a low data transmission rate and covering a wide area and a wireless LAN system having a high data transmission rate and covering a small area (hot spot area).

In such a system, the mobile station is connected to a wireless LAN system in a wireless LAN area so as to communicate at the highest possible data rate, while it is connected to a cellular system outside the wireless LAN area. Furthermore, in order to allow the mobile station to communicate with a station with the lowest possible transmission output, there is also a configuration that allows the mobile station to be connected with high priority to a system in which this counterpart station exists (e.g., see the Unexamined Japanese Patent Publication No.2002-141857).

However, the conventional communication system has various problems that a mobile station located close to the end of a wireless LAN area frequently needs to carry out handover processing, while a mobile station crossing the end of the area is subject to a delay in data transmission because of handover processing. Furthermore, there is another problem that when the mobile station goes out of a wireless LAN area, if the cellular system outside the area has not enough channel capacity, delivery of received images is interrupted the moment it goes out of the area.

### Disclosure of Invention

It is an object of the present invention, when a third communication system which integrates two independent communication systems such as a cellular system and a wireless LAN system is considered, to prevent frequent handover processing or sudden interruption of communication even when a communication terminal freely moves in the area covered by this third communication system and provide efficient data communication with consideration given to the characteristics of the two independent communication systems.

This object can be attained through a transmission method whereby data out of data to be transmitted to a communication terminal which matches the characteristic of a first communication system is allocated to the first communication system and data which matches the characteristic of a second communication system is allocated to the second communication system and the data is then transmitted to the respective communication systems.

### Brief Description of Drawings

FIG.1 illustrates an overview of a wireless communication system according to Embodiment 1 of the present invention;
FIG.2 is a block diagram showing details of configurations of a router, base station apparatus and access point apparatus according to Embodiment 1 of the present invention;
FIG.3 is a block diagram showing an internal configuration of a mobile station apparatus according to Embodiment 1 of the present invention;
FIG.4A specifically illustrates an effect exerted by a wireless communication system according to Embodiment 1 of the present invention;
FIG.4B specifically illustrates an effect exerted by the wireless communication system according to Embodiment 1 of the present invention;
FIG.5 is a block diagram showing a configuration of a mobile station apparatus according to Embodiment 2 of the present invention;
FIG.6 is a block diagram showing details of configurations of a router, base station apparatus and access point apparatus according to Embodiment 2 of the present invention;
FIG.7A specifically illustrates an effect exerted by a wireless communication system according to Embodiment 2 of the present invention;
FIG.7B specifically illustrates an effect exerted by the wireless communication system according to Embodiment 2 of the present invention;
FIG.7C specifically illustrates an effect exerted by the wireless communication system according to Embodiment 2 of the present invention;
FIG.8 is a block diagram showing a configuration of a router according to Embodiment 3 of the present invention;
FIG.9 is a table showing an example of data allocation by the router according to Embodiment 3 of the present invention;
FIG.10 illustrates an example of a conventional wireless communication system;
FIG.11 illustrates an example of a communication system according to Embodiment 4 of the present invention;
FIG.12 is a block diagram illustrating an example of a configuration of a communication terminal apparatus according to Embodiment 5 of the present invention;
FIG.13 is a block diagram illustrating an example of a configuration of a communication terminal apparatus according to Embodiment 6 of the present invention;
FIG. 14 is a flow chart showing a method of adjusting a downlink transmit power control step size according to Embodiment 6 of the present invention;
FIG.15 is a block diagram illustrating an example of a configuration of a wireless LAN access point apparatus according to Embodiment 7 of the present invention;
FIG.16 illustrates a signal configuration in a wireless communication system according to Embodiment 8 of the present invention;
FIG.17A illustrates an example of separation/arrangement of subcarrier signals used in a wireless communication system according to Embodiment 9 of the present invention;
FIG.17B illustrates an example of separation/arrangement of subcarrier signals used in the wireless communication system according to Embodiment 9 of the present invention;
FIG.18A illustrates an example of separation/arrangement of subcarrier signals used in the wireless communication system according to Embodiment 9 of the present invention; and
FIG.18B illustrates an example of separation/arrangement of subcarrier signals used in the wireless communication system according to Embodiment 9 of the present invention.

### Best Mode for Carrying out the Invention

With reference now to the attached drawings, embodiments of the present invention will be explained in detail below.

### (Embodiment 1)

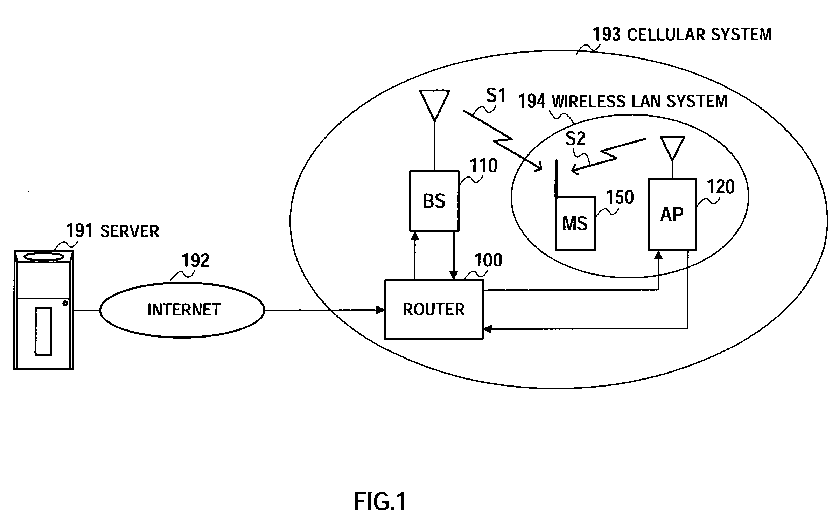

FIG.1 illustrates an overview of a wireless communication system according to Embodiment 1 of the present invention. Here, a case where image information sent from a server is sent to a mobile station apparatus (communication terminal apparatus) will be explained as an example.

A wireless communication system shown in FIG.1 includes a server 191, Internet 192, a cellular system 193 and a wireless LAN system 194. The cellular system 193 includes a router 100 and a base station apparatus (BS) 110 and the wireless LAN system 194 includes an access point apparatus (AP) 120. The area of the wireless LAN system 194 exists within the area of the cellular system 193. The cellular system 193 and the wireless LAN system 194 are communication systems independent of each other.

The server 191 sends image information to the router 100 through the Internet 192. This image information consists of basic data which has low resolution but can configure one image (screen) by itself and complementary data which is data to complement this basic data and allows an image with higher resolution to be obtained when combined with the basic data.

The router 100 acquires the image information sent from the server 191 and allocates the basic data of this image information to the BS 110 of the cellular system 193, allocates the complementary data to the AP 120 of the wireless LAN system 194 and sends the respective data items.

The BS 110 sends the basic data to the mobile station apparatus (MS) 150 using a wireless signal S1 and the AP 120 sends the complementary data to the MS 150 using a wireless signal S2. In FIG.1, the MS 150 exists within the area of the wireless LAN system 194.

The MS 150 has two reception systems and can receive two signals sent from the cellular system 193 and wireless LAN system 194 simultaneously. Then, while the MS 150 exists within the area of the cellular system 193 (the area controlled by the BS 110) , the MS 150 always maintains a communication channel with the BS 110 and when the MS 150 enters the area of the wireless LAN system 194, it can further open a channel with the AP 120 according to the situation while maintaining the channel with the BS 110.

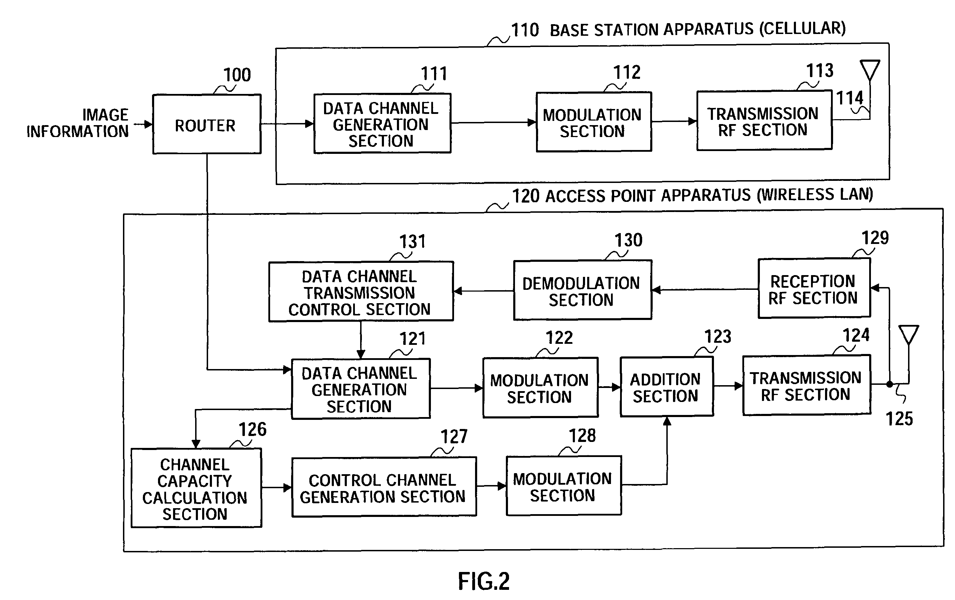

FIG.2 is a block diagram showing details of configurations of the router 100, the base station apparatus 110 of the cellular system 193 and the access point apparatus 120 of the wireless LAN system 194.

In this figure, the base station apparatus 110 of the cellular system is provided with a data channel generation section 111, a modulation section 112, a transmission radio (RF) section 113 and an antenna 114. Furthermore, the access point apparatus 120 of the wireless LAN system is provided with a data channel generation section 121, a modulation section 122, an addition section 123, a transmission radio section 124, an antenna 125, a channel capacity calculation section 126, a control channel generation section 127, a modulation section 128, a reception radio section 129, a demodulation section 130 and a data channel transmission control section 131.

The image information consisting of the basic data and complementary data sent from the server 191 through the Internet 192 is allocated by the router 100 to the base station apparatus 110 and access point apparatus 120 respectively. More specifically, the basic data is sent to the data channel generation section 111 in the base station apparatus 110, while the complementary data is sent to the data channel generation section 121 in the access point apparatus 120.

In the cellular system 193, the basic data output from the data channel generation section 111 is subjected to predetermined processing at the modulation section 112 and transmission radio section 113 and sent to the mobile station apparatus 150 through the antenna 114. On the other hand, in the wireless LAN system 194, when a data transmission request is received from the mobile station apparatus 150 through the data channel transmission control section 131 (which will be described later) , the modulation section 122 and transmission radio section 124 carry out predetermined processing and the complementary data is sent to the mobile station apparatus 150 through the antenna 125.

Furthermore, using a control channel which is open between the access point apparatus 120 and the mobile station apparatus 150, that is, by adding signals generated through the channel capacity calculation section 126, control channel generation section 127 and modulation section 128 to a transmission signal including the above described image information at the addition section 123 and sending the resulting signal through the transmission radio section 124 and antenna 125, the channel capacity of the wireless LAN system 194 is notified to the mobile station apparatus 150.

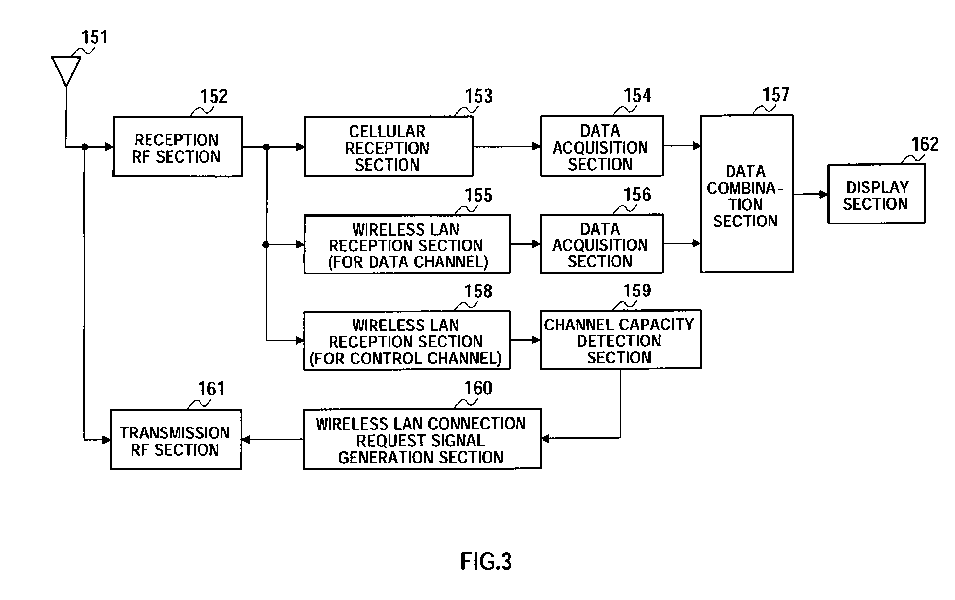

FIG.3 is a block diagram showing an internal configuration of the mobile station apparatus 150.

The mobile station apparatus 150 is provided with an antenna 151, a reception radio (RF) section 152, a cellular reception section 153, a data acquisition section 154, a wireless LAN reception section (for data channel) 155, a data acquisition section 156, a data combination section 157, a wireless LAN reception section (for control channel) 158, a channel capacity detection section 159, a wireless LAN connection request signal generation section 160, a transmission radio (RF) section 161 and a display section 162.

A signal received through the antenna 151 is subjected to predetermined reception radio processing such as down-conversion at the reception radio section 152 and output to the cellular reception section 153, wireless LAN reception section (for data channel) 155 and wireless LAN reception section (for control channel) 158.

The cellular reception section 153 always continues to receive the basic data regardless of the area in which the mobile station apparatus 150 is located. Furthermore, when the mobile station apparatus 150 moves into the area of the wireless LAN system 194, it receives a control channel of the wireless LAN system through the antenna 151, reception radio section 152 and wireless LAN reception section (for control channel) 158 and detects information on the channel capacity of the wireless LAN system at the channel capacity detection section 159. When there remains a sufficient capacity in the wireless LAN, the wireless LAN connection request signal generation section 160 creates a signal for requesting allocation of a wireless LAN channel in order to send a request for connection to the wireless LAN system and sends the request signal to the access point apparatus 120 of the wireless LAN system through the transmission radio section 161 and antenna 151.

When the mobile station 150 enters the area of the wireless LAN system, the access point apparatus 120 sends the above described complementary data to the mobile station 150 only when there is a sufficient channel capacity.

In the mobile station apparatus 150, the basic data acquired from the cellular system through the cellular reception section 153 and data acquisition section 154 and the complementary data acquired from the wireless LAN system through the wireless LAN reception section (for data channel) 155 and data acquisition section 156 are combined at the data combination section 157, and the image data obtained is displayed on the display section 162.

The above described configuration prevents handover processing frombeing carried out at the end of the wireless LAN area, and thereby produces no delay in data transmission due to handover. Furthermore, also when the mobile station apparatus 150 goes out of the area of the wireless LAN, the mobile station apparatus remains connected to the cellular system, and therefore data distribution is never interrupted.

Furthermore, without carrying out handover processing, the mobile station can always receive images of quality at a certain level or higher and can receive images with a high degree of accuracy when it arrives at the wireless LAN area only when there remains a sufficient capacity in the wireless LAN.

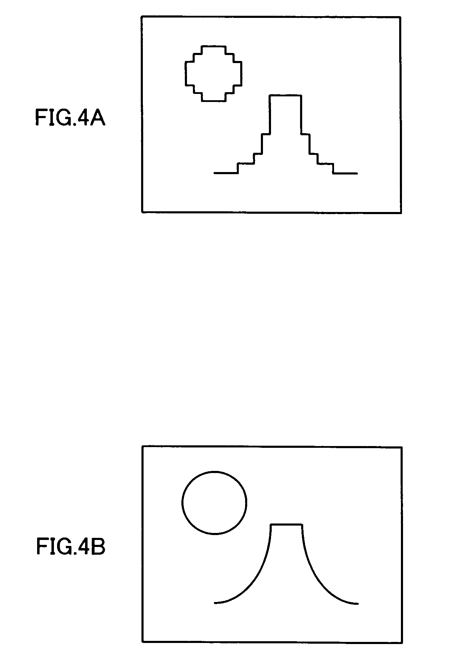

FIG.4 specifically illustrates an effect exerted by the wireless communication system in the above described configuration.

The communication terminal apparatus in the above described wireless communication system receives only the basic data within the area of the cellular system 193 (except the area of the wireless LAN system 194), and therefore an image with low resolution as shown in FIG.4A is displayed on a screen of the display section 162. However, when the mobile station apparatus 150 enters the area of the wireless LAN system 194 and there is a sufficient channel capacity in the wireless LAN system 194, not only the basic data but also the complementary data is received, and therefore an image with high resolution resulting from a combination of both data items is displayed on the screen as shown in FIG.4B.

Through the above described operation, the mobile station can always continue to receive at least data with low resolution, and even if the mobile station cannot carry out handover to the wireless LAN system when it enters the wireless LAN area, the image is never interrupted.

Furthermore, when the mobile station arrives at the wireless LAN area, it is automatically connected to the wireless LAN only when there remains a sufficient capacity in the wireless LAN, and therefore the user who uses the mobile station can receive services seamlessly without being aware of the fact that the user has arrived at the wireless LAN area.

As shown above, the cellular system 193 covers a wide area including the coverage of the wireless LAN system 194, and therefore, as a method of transmitting data, it is appropriate to assign a seamless communication which is never interrupted midway to the cellular system 193 (BS 110) and assign the other auxiliary communication to the wireless LAN system 194 (AP 120) . Thus, the router 100 allocates the data acquired from the server 191 to the respective communication systems according to this transmission method.

The above described image data can be image data subjected to layered coding such as pyramid coding or data compressed according to an MPEG (Moving Picture Experts Group) scheme, that is, moving image data. In the case of MPEG data, an I frame in which one image information item is formed of only one transmission frame corresponds to the above described basic data and a P frame and B frame which are difference information between the preceding and following I frames correspond to the complementary data. At this time, in a wide area of the cellular system, it is always possible to receive moving images at a low frame rate (which seem to be a single frame step), while in a narrow area of the wireless LAN system, it is possible to receive smooth moving images at a high frame rate.

Furthermore, as more specific data allocating means at the router 100, it is also possible to use predetermined port numbers of TCP or UDP.

According to a TCP/IP protocol, when data is transmitted to an application or higher level protocol, data is sent with a port number (address) specified. In this embodiment, transmission is performed between the server and mobile station with their respective ports determined. That is, different ports are allocated to data to be sent from the wireless LAN system and data to be sent from the cellular system and transmission is performed using two ports. In this way, it is possible for the router to easily allocate data to the wireless LAN system and cellular system by detecting port numbers.

Thus, according to this embodiment, in a third communication system in which the area of a second communication system such as a wireless LAN system covering a narrow area exists in the area of a first communication system such as a cellular system covering a wide area, the communication terminal can continue to receive data of predetermined quality or higher from the first communication system all the time, and therefore when the communication terminal enters the area of the second communication system, the communication terminal can prevent interruption of communications even if it cannot carry out handover to this second communication system. In other words, even when the communication terminal is located close to the end of the area of the second communication system, handover processing does not occur frequently and no delay is produced in data transmission even if the communication terminal crosses the end of the area. It is further possible to prevent the communication from being interrupted the moment the communication terminal goes out of the area of the second communication system and allow the user of the communication terminal to carry out seamless communications.

Here, a case where image information is sent from the server 191 has been explained as an example, but the present invention is not limited to this and this image information may also be broadcast information or information in other forms.

Furthermore, this embodiment has described the case where when the channel capacity calculation section 126 detects that the channel capacity of the wireless LAN system 194 is not sufficient, the mobile station apparatus 150 recognizes this fact through the channel capacity detection section 159, decides to stop data reception from the wireless LAN system 194 and notifies the access point apparatus 120 of this fact, as an example, but when the channel capacity calculation section 126 detects that the channel capacity of the wireless LAN system 194 is insufficient, the access point apparatus 120 itself can also decide to stop data transmission to the mobile station apparatus 150 and the channel capacity calculation section 126 can directly output a control signal for stopping data channel generation to the data channel generation section 121.

### (Embodiment 2)

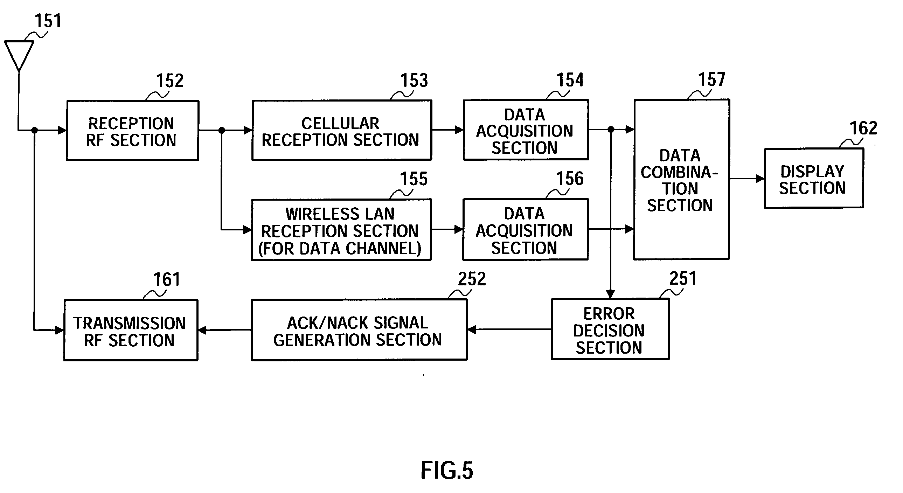

FIG.5 is a block diagram showing a configuration of a mobile station apparatus according to Embodiment 2 of the present invention. This mobile station apparatus has a basic configuration similar to that of the mobile station apparatus shown in FIG.3, and therefore the same components are assigned the same reference numerals and explanations thereof will be omitted.

A feature of the mobile station apparatus shown in FIG.5 is that it is provided with an error decision section 251 and an ACK/NACK signal generation section 252 and sends a retransmission request to the transmitting side when there is an error in received data.

The error decision section 251 decides the presence/absence of an error in the data output from a data acquisition section 154 and outputs the decision result to the ACK/NACK signal generation section 252. The ACK/NACK signal generation section 252 generates an ACK signal or NACK signal based on this decision result and sends this signal to an access point apparatus 120a of a wireless LAN system through a transmission radio section 161 and antenna 151.

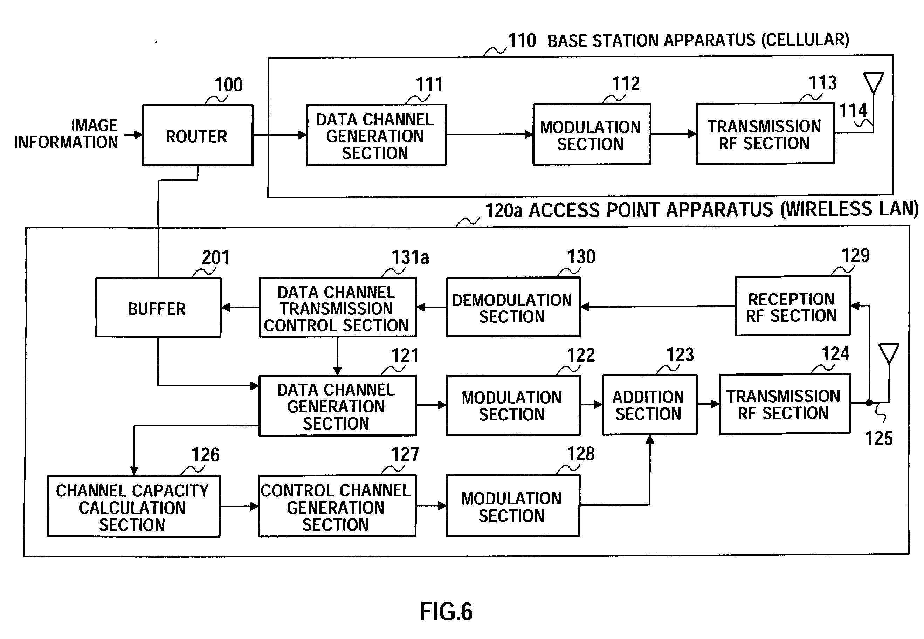

FIG.6 is a block diagram showing details of the configurations of a router 100, a base station apparatus 110 and the access point apparatus 120a, which are communication partners of the mobile station apparatus shown in FIG.5. These apparatuses have basic configurations similar to those of the apparatuses shown in FIG.2 and the same components are assigned the same reference numerals and explanations thereof will be omitted.

An ACK/NACK signal sent from the mobile station apparatus shown in FIG.5 is received through an antenna 125, a reception radio section 129 and a demodulation section 130, and a data channel transmission control section 131a controls retransmission of data based on this signal. More specifically, the data sent from the router 100 is stored in a buffer 201, and when a retransmission request is received from the mobile station apparatus, the request is output to a data channel generation section 121 and sent through a modulation section 122, an addition section 123, a transmission radio section 124 and an antenna 125.

Thus, when image data is sent to the mobile station, the cellular system continues to send real-time image without including retransmission information from the cellular system. On the other hand, the wireless LAN system performs retransmission for the data containing an error according to the retransmission request from the mobile station. The mobile station can at least acquire image data of quality without retransmission no matter in which area it is located.

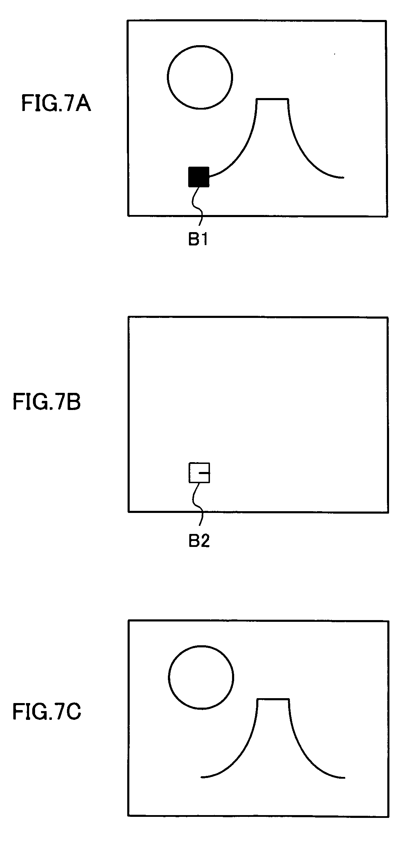

FIG. 7 illustrates an effect exerted by the wireless communication system in the above described configuration more specifically.

FIG.7A shows an image sent from the cellular system. A data block B1 indicates that part of an image is missing due to a reception error. On the other hand, FIG.7B shows image data sent from the wireless LAN system. Since only retransmitted data is sent, only a data block B2 exists. FIG.7C shows an image resulting from a combination of data items sent from both systems. When the mobile station apparatus is successful in opening a channel in the wireless LAN system, it can display an image of such high quality.

Thus, according to this embodiment, the mobile station can always at least receive an image of quality without retransmission without the need to carry out handover processing. Furthermore, when the mobile station arrives at the wireless LAN area, it can receive an image of better quality, allowing the user to enjoy images of high quality.

### (Embodiment 3)

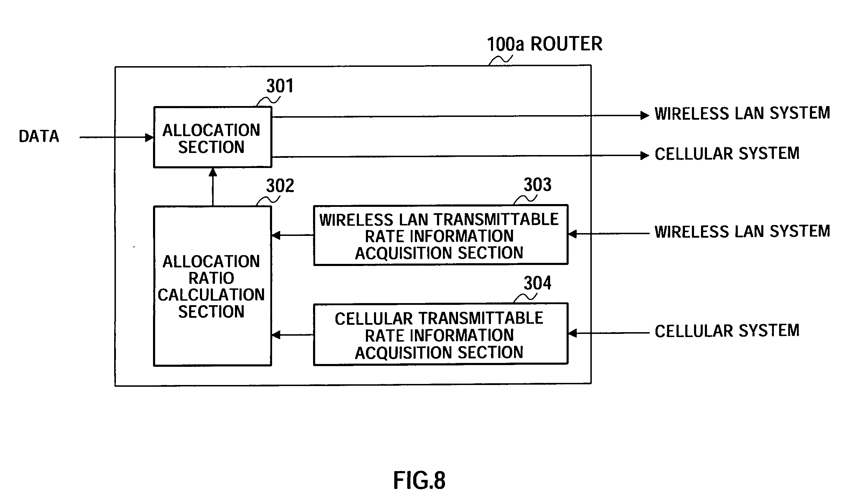

A wireless communication system according to Embodiment 3 of the present invention has a configuration similar to that of the wireless communication system shown in FIG.1, and therefore a block diagram only showing a configuration of a router will be shown in FIG.8 here.

A router 100a is provided with an allocation section 301, an allocation ratio calculation section 302, a wireless LAN transmittable rate information acquisition section 303 and a cellular transmittable rate information acquisition section 304.

The allocation section 301 receives (acquires) data sent from the server 191 through the Internet 192, allocates and outputs the data sent from the server 191 based on an allocation ratio output from the allocation ratio calculation section 302 to the respective systems. The allocation ratio calculation section 302 decides the allocation ratio based on a transmittable data rate of the wireless LAN system acquired through the wireless LAN transmittable rate information acquisition section 303 and a transmittable data rate of the cellular system acquired through the cellular transmittable rate information acquisition section 304 and outputs the allocation ratio to the allocation section 301.

When data is allocated, the allocation ratio calculation section 302 detects transmittable information rates of the cellular system and the wireless LAN system and decides rates of data to be sent from the respective systems according to the ratio of the information rates.

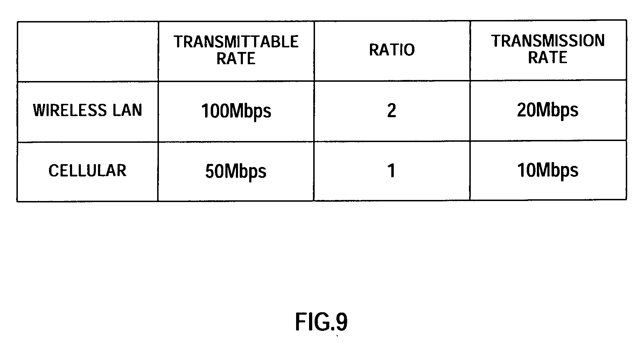

FIG. 9 shows an example of this data allocation. For example, when the server 191 sends 30 Mbps data, suppose the transmittable rate notified from the wireless LAN system is 100 Mbps and the transmittable rate notified from the cellular system is 50 Mbps. In this case, the ratio of transmittable rates is 2:1. Therefore, the transmission rates allocated by the router 100a are 20 Mbps and 10 Mbps.

In general, there is a difference between the transmission rate of the cellular system 193 and that of the wireless LAN system 194. Thus, if data is allocated according to the transmission rates of both communication systems as shown above, it is possible to perform communications suitable for both communication systems.

Thus, according to this embodiment, data rates of two transmission systems are adjusted, and therefore it is possible to avoid data from being stalled in one transmission system. When real-time data transmission is performed, this can prevent such a problem that when data of one of the two transmission systems arrives earlier and the other data arrives late, it is not possible to carry out data reception processing or clear the content of the buffer for a long time.

### (Embodiment 4)

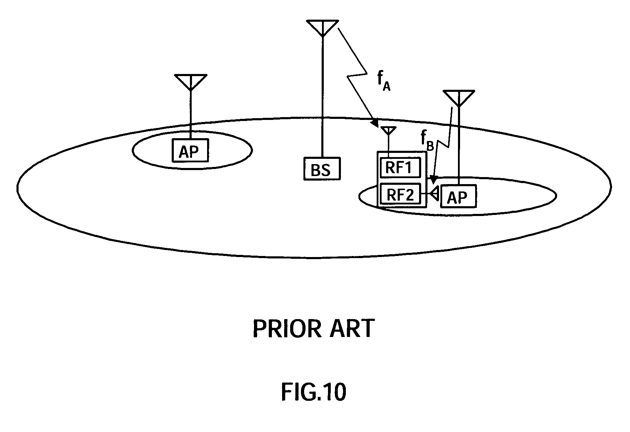

FIG.10 shows an example of a conventional wireless communication system. This embodiment will explain a case where there is a wireless communication system (e.g., high-speed wireless LAN) which covers an area which locally exists in a cell of a cellular scheme mobile communication system (hereinafter referred to as "hot spot area" or simply "hot spot") and one terminal communicates with these two systems, and especially a case where the terminal receives hot spot services while maintaining a link with a cellular scheme base station to secure the quality of real-time services, as an example .

This wireless communication system has a merit that no interference occurs between systems when the frequency band used in the cellular scheme and that of the hot spot are different, but a mobile communication terminal must carry out radio (RF) processing for each system, and therefore each system requires an RF circuit. Moreover, no RF circuit for a hot spot frequency can be used outside the hot spot area.

On the other hand, when the frequency band of the cellular scheme and that of the hot spot are the same, allocated time slots/frequencies/codes should not overlap with one another to avoid interference among systems, which complicates communication control and also complicates the circuit configuration.

One example of the above described wireless communication system is disclosed in the Unexamined Japanese Patent Publication No.HEI 8-140135. This is an example where a frequency hopping method is used in layered macro cells/micro cells.

However, this wireless communication system has a problem that when the frequency band used in the cellular scheme and that of the hot spot are the same or different, the scale of the circuit of the communication terminal and load on the communication system increase and the frequency utilization efficiency is low.

On the other hand, as a technology for increasing a transmission capacity by sending different information streams from a plurality of transmission antennas at the same time and using the same frequency, a Multi-Input Multi-Output (MIMO) wireless communication system is known.

The present inventor has discovered that when a communication terminal communicating with a plurality of independent wireless communication systems incorporates a reception function using the above described MIMO technology, it is possible to construct a communication system with high frequency utilization efficiency.

A feature of this embodiment is that with the MIMO reception function incorporated in the communication terminal apparatus, a downlink transmission signal of a cellular scheme communication system and a downlink signal of a hot spot communication system such as an ultra-high-speed wireless LAN which are operated at the same frequency are received simultaneously. This makes it possible to improve the frequency utilization efficiency.

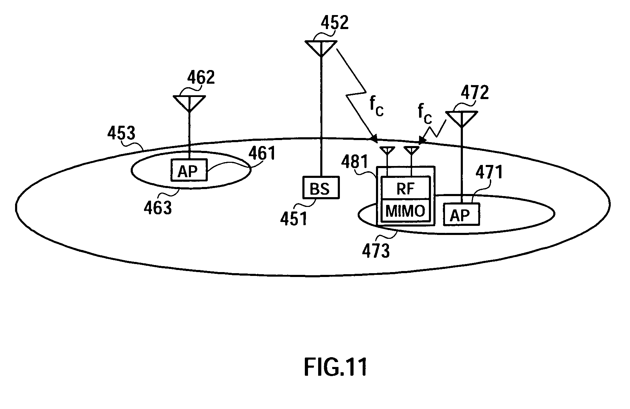

FIG.11 illustrates an example of a configuration of a wireless communication system according to Embodiment 4 of the present invention. Here, this embodiment will describe a case where a communication terminal apparatus communicates with base stations of two different communication systems, or more specifically, a cellular scheme base station and an access point (AP) which controls hot spot areas such as ultra-high-speed wireless LAN, as an example.

The communication system shown in FIG.11 is constructed of a base station (BS) 451, hot spot APs 461 and 471 and a mobile communication terminal 481.

The BS 451 is a component of a cellular scheme communication system, which is provided with a transmission antenna 452 and controls a cell 453.

The AP 471 is a component of a wireless LAN communication system, which is provided with a transmission antenna 472 and controls an area 473.

The AP 461 may adopt the same communication system as that of the AP 471 or may adopt a different communication system. As in the case of the AP 471, the AP 461 is provided with a transmission antenna 462 and controls an area 463.

The mobile communication terminal 481 communicates with the BS 451 and AP 471 at a frequency f_{c}. As a specific configuration, the mobile communication terminal 481 is provided with two reception antennas, one radio reception processing section (RF circuit) and 2×2 MIMO reception functions and can separate and receive different data strings sent from the cellular scheme base station and the hot spot AP at the same frequency, at the same time and using the same spreading code. The MIMO reception function will be described later.

This mobile communication terminal 481 has two reception modes; one for reception within the hot spot service area and the other for reception outside the hot spot service area. It operates in the MIMO reception mode within the hot spot service area. Outside the hot spot service area, it stops the MIMO reception function and operates in a reception diversity mode. Therefore, it is possible to reduce power consumption.

Then, the mechanism of the wireless communication system in the above described configuration will be explained.

In an MIMO communication, a signal sent from a transmission apparatus is received with the same number or a greater number of antennas and propagation path estimation is performed for each antenna pair based on pilot signals inserted in the received signal. This estimated propagation path characteristic H is expressed by, for example, a 2×2 matrix when there are two transmission antennas at the transmission apparatus and two reception antennas at the reception apparatus.

Then, according to the MIMO scheme communication method, it is possible to separate and obtain a transmission signal sent from each transmission apparatus based on the inverse matrix of the propagation path H calculated in this way and each received signal. That is, it is possible to apply radio reception processing to signals sent at the same frequency through one RF circuit. Therefore, it is not necessary to use different frequencies for wireless communications with a plurality of channels and the frequency efficiency is improved. It is also possible to perform RF processing with a single circuit, and therefore the scale of the circuit of the communication terminal apparatus can be reduced.

Wireless Personal Communication,Vol.6,1998, "On Limits of Wireless Communication in a Fading Environment when Using Multiple Antennas", Foschini G.J.;Gans M.J. clearly states that in the MIMO wireless communication system, if the number of reception antennas is greater than the number of transmission antennas, the transmission capacity increases linearly, and this condition on the number of antennas generally constitutes constraining condition in the design of the MIMO wireless communication system.

Thus, in this embodiment, when the mobile communication terminal 481 within the service area 473 of the hot spot communication system is communicating with the base station 451 of the cellular scheme communication system and the base station (access point) 471 of the hot spot communication system simultaneously, a constraint is provided in such a way that the sum of the number of downlink transmission antennas of the cellular scheme communication system and the number of downlink transmission antennas of the hot spot communication system is equal to or smaller than the number of reception antennas of the mobile communication terminal 481.

On the other hand, when the mobile communication terminal 481 is outside the service area 473 of the hot spot communication system and within the service area 453 of the cellular scheme communication system, and does not perform MIMO reception processing any longer, the constraint provided on the number of the downlink transmission antennas of the cellular scheme communication system is canceled. Therefore, in this case, it is possible to increase the number of cellular scheme downlink transmission antennas.

Furthermore, when it is detected through broadcast channel reception from the hot spot AP that the mobile communication terminal 481 has moved into the service area 473 of the hot spot communication system, the base station 451 of the cellular scheme communication system and the base station 471 of the hot spot communication system are notified that the mobile communication terminal 481 has moved into the service area of the hot spot communication system.

Thus, according to this embodiment, it is possible to provide a wireless communication system capable of reducing the scale of the circuit and system load and improving the frequency utilization efficiency. Furthermore, as communication services specific to the wireless communication system of the present invention, the following specific examples can be considered:

The services provided from the hot spot communication system can be broadcast communication services for all mobile communication terminals which exist within the service area of the hot spot communication system. At this time, communications of the individual mobile communication terminals are carried out using the cellular scheme communication system.

When the mobile communication terminal receives and decodes a downlink signal from the hot spot communication system, detects an error as a result and sends a retransmission request, it is also possible to send a retransmission packet in response to this retransmission request using a downlink of the cellular scheme communication system instead of the hot spot communication system.

When the mobile communication terminal located in the service area of the hot spot communication system is carrying out simultaneous communication with the base station of the cellular scheme communication system and the base station of the hot spot communication system, it is possible to send part of control information regarding the hot spot communication system (e.g., notification of the transmission method, ACK/NACK, authentication, billing) using the link of the cellular scheme communication system.

When the mobile communication terminal located within the service area of the hot spot communication system is carrying out simultaneous communication with the base station of the cellular scheme communication system and base station of the hot spot communication system, it is possible to send encrypted data on the downlink link of the hot spot communication system and send part of a decoding key in the cellular scheme communication system.

When the mobile communication terminal located within the service area of the hot spot communication system is carrying out simultaneous communication with the base station of the cellular scheme communication system and base station of the hot spot communication system, it is possible to send important and highly urgent data using two communication systems to allow the mobile communication terminal to combine the reception results and improve the reliability of the data.

### (Embodiment 5)

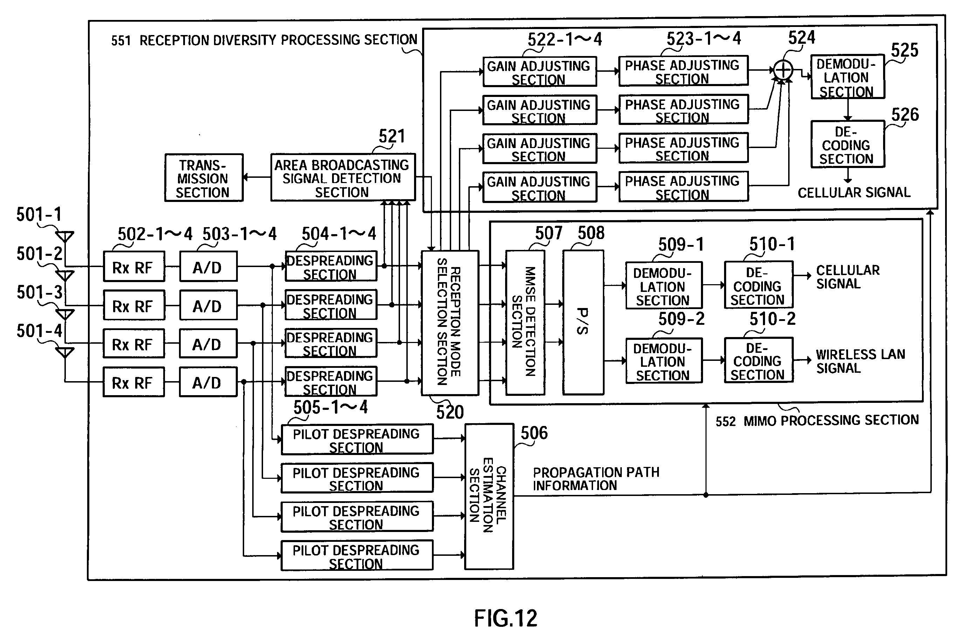

FIG.12 is a block diagram showing an example of a configuration of a communication terminal apparatus according to Embodiment 5 of the present invention.

In FIG.12, radio reception (Rx RF) sections 502-1 to 502-4 apply predetermined radio processing such as down-conversion to signals received by antennas 501-1 to 501-4 and output the signals to A/D conversion sections 503-1 to 503-4.

The A/D conversion sections 503-1 to 503-4 apply A/D conversion processing to the received signals output from the radio reception sections 502-1 to 502-4 and output the signals to despreading sections 504-1 to 504-4 and pilot despreading sections 505-1 to 505-4.

The despreading sections 504-1 to 504-4 multiply the signals output from the A/D conversion sections 503-1 to 503-4 by predetermined despreading codes to thereby apply despreading processing to the received signals and output the despread signals to an area broadcasting signal detection section 521 and a reception mode selection section 520.

The area broadcasting signal detection section 521 detects area broadcasting signals sent from an AP in a predetermined area from the signals output from the despreading sections 504-1 to 504-4.

A reception mode selection section 520 selects a reception mode based on the detection result from the area broadcasting signal detection section 521.

The pilot despreading sections 505-1 to 505-4 apply despreading processing of pilot signals known to the receiving side to the signals output from the A/D conversion sections 503-1 to 503-4 and output the despread signals to a channel estimation section 506.

In order to compensate for phase variations or amplitude variations in propagation paths of transmission signals, the channel estimation section 506 performs channel estimation from pilot signals output from the pilot despreading sections 505-1 to 505-4, calculates channel estimated values, creates a replica and outputs it to an MMSE detection section 507.

The MMSE detection section 507 performs stream separation based on the MMSE detection on the signals output from the reception mode selection section 520 and the replica output from the channel estimation section 506 using a predetermined algorithm such as LMS or RLS and outputs this result to a P/S conversion section 508. Instead of MMSE detection, it is also possible to use a stream separation algorithm based on ZF (Zero Forcing) or maximum likelihood sequence estimation.

The P/S conversion section 508 converts the MMSE detection result which is parallel data output from the MMSE detection section 507 to serial data and outputs the serial data to demodulation sections 509-1 and 509-2.

The demodulation sections 509-1 and 509-2 apply demodulation processing to the data output from the P/S conversion section 508 and output the demodulated data to decoding sections 510-1 and 510-2. The decoding section 510-1 applies decoding processing to the demodulated data output from the demodulation section 509-1 to obtain a wireless LAN signal. The decoding section 510-2 applies decoding processing to the demodulated data output from the demodulation section 509-2 to obtain a cellular signal. Gain adjusting sections 522-1 to 522-4 apply gain adjustments to the output signals of the reception mode selection section 520. Phase adjusting sections 523-1 to 523-4 apply phase adjustments to the outputs of the gain adjusting section 522-1 to 522-4. An adder 524 adds up the outputs of the phase adjusting sections 523-1 to 523-4. A demodulation section 525 applies demodulation processing to the data output from the adder 524 and outputs the demodulated data to a decoding section 526. The decoding section 526 applies decoding processing to the demodulated data output from the demodulation section 525 to obtain a cellular signal.

Then, the operation of the communication terminal apparatus in the above described configuration will be explained.

The communication terminal apparatus according to this embodiment has two reception modes; one for reception in the hot spot service area and the other for reception outside the hot spot service area.

Within the service area of the hot spot communication system, the communication terminal apparatus operates in an MIMO reception mode. On the other hand, outside the service area of the hot spot communication system and within the service area of the cellular scheme communication system, the communication terminal apparatus stops the MIMO reception processing and operates in a reception diversity mode.

As described above, according to this embodiment, the MIMO processing is stopped outside the hot spot area, and therefore it is possible to reduce power consumption. Furthermore, it is possible to effectively use an RF circuit through antenna diversity reception.

### (Embodiment 6)

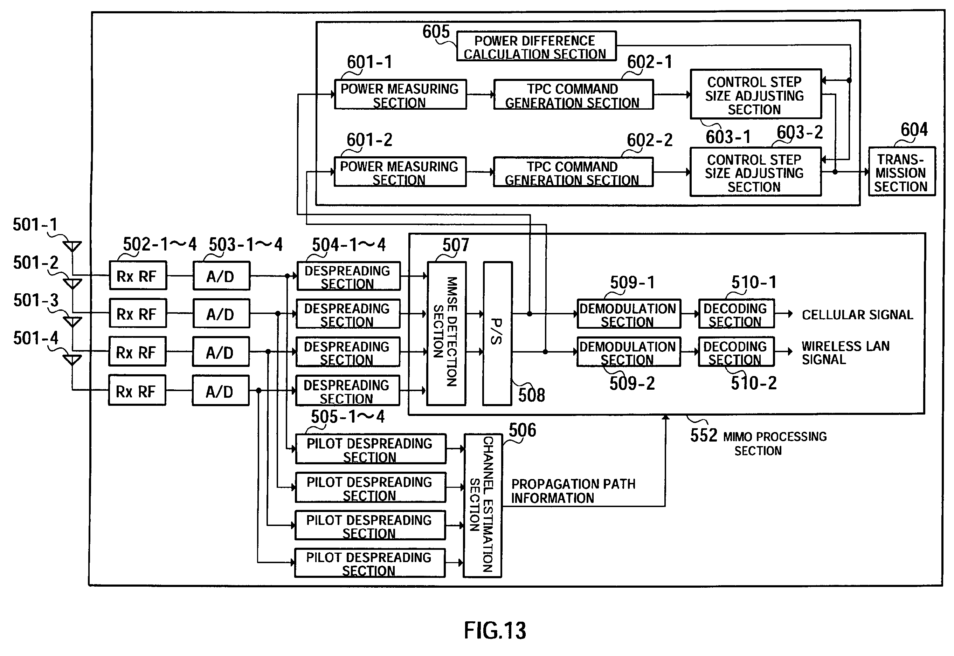

FIG.13 is a block diagram illustrating an example of a configuration of a communication terminal apparatus according to Embodiment 6 of the present invention. This communication terminal apparatus has a basic configuration similar to that of the communication terminal apparatus shown in FIG. 12 and the same components are assigned the same reference numerals and explanations thereof will be omitted.

In FIG.13, a P/S conversion section 508 converts a result of MMSE detection which is parallel data output from an MMSE detection section 507 to serial data and outputs the serial data to power measuring sections 601-1 and 601-2. The power measuring section 601-1 measures mean reception power of cellular scheme signals from the output of the P/S conversion section 508. The power measuring sections 601-2 measures mean reception power of wireless LAN scheme signals from the output of the P/S conversion section 508. TPC command generation sections 602-1 and 602-2 generate transmit power control (TPC) commands based on the mean reception power measured at the power measuring sections 601-1 and 601-2. Control step size adjusting sections 603-1 and 603-2 adjust a control step size for transmit power control based on the TPC commands output from the TPC command generation sections 602-1 and 602-2 and output the control step size to a transmission section 604. A power difference calculation section 605 calculates a difference in the mean power measured at the power measuring sections 601-1 and 601-2 and outputs the difference to the control step size adjusting sections 603-1 and 603-2.

Then, the operation of the communication terminal apparatus in the above described configuration will be explained.

The mobile communication terminal receives signals at the same frequency from the two communication systems simultaneously. Then, it measures mean reception power for each communication system and sends a transmit power control (TPC) command to each base station. Here, when a difference in the reception power level between the received signals is too large, stream separation may become difficult in MIMO reception, and therefore transmit power control is performed. To eliminate the difference as soon as possible, the transmit power control step size is also adjusted.

When the mobile communication terminal located within the service area of the hot spot communication system is carrying out simultaneous downlink communications with the base station of the cellular scheme communication system and the base station of the hot spot communication system, the mobile communication terminal measures mean received signal power from the two communication systems and sends downlink transmit power control commands to the respective base stations.

The communication terminal calculates a difference in the mean received signal power between the communication systems. The communication terminal adjusts the power control step size in the direction in which the received signal power difference decreases and sends downlink transmit power control commands to the base stations of the two communication systems.

For example, when mean received signal power from the hot spot is quite large compared to the mean received signal power from the cellular scheme, the communication terminal sends a TPC command for considerably decreasing downlink transmit power to the hot spot access point and sends a TPC command for considerably increasing downlink transmit power to the cellular scheme base station.

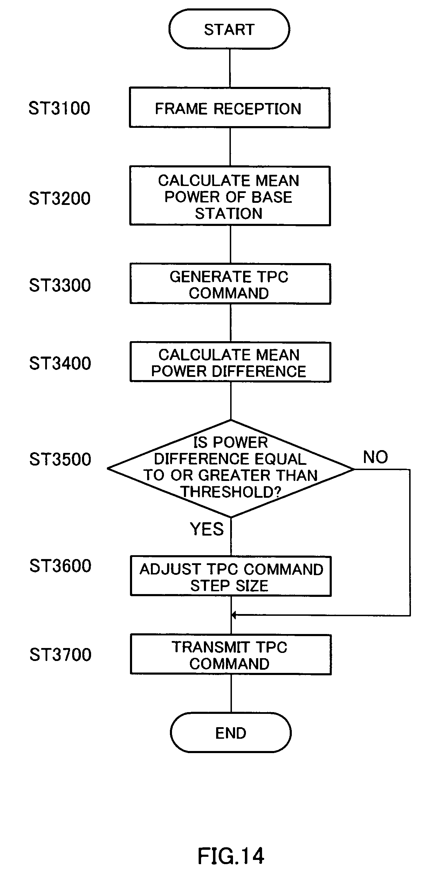

FIG.14 is a flow chart of a method of adjusting the above described transmit power control step size.

The communication terminal apparatus according to this embodiment carries out frame reception (ST3100) and then calculates mean power of the received signal for each base station (ST3200). A TPC command is generated based on this calculated mean power (ST3300). Furthermore, a difference in the mean power is calculated (ST3400) .

Then, when the power difference calculated in ST3400 is equal to or greater than a threshold (ST3500), the control step size of the TPC command is adjusted so as to decrease the received power difference as soon as possible (ST3600).

When the power difference calculated in ST3400 is lower than the threshold (ST3500), the control step size of the TPC command is not adjusted.

Then, the TPC command is transmitted using the uplink (ST3700).

Thus, according to this embodiment, since the control step size of the TPC command is adjusted according to the difference in the reception power, it is possible to improve the MIMO reception performance.

### (Embodiment 7)

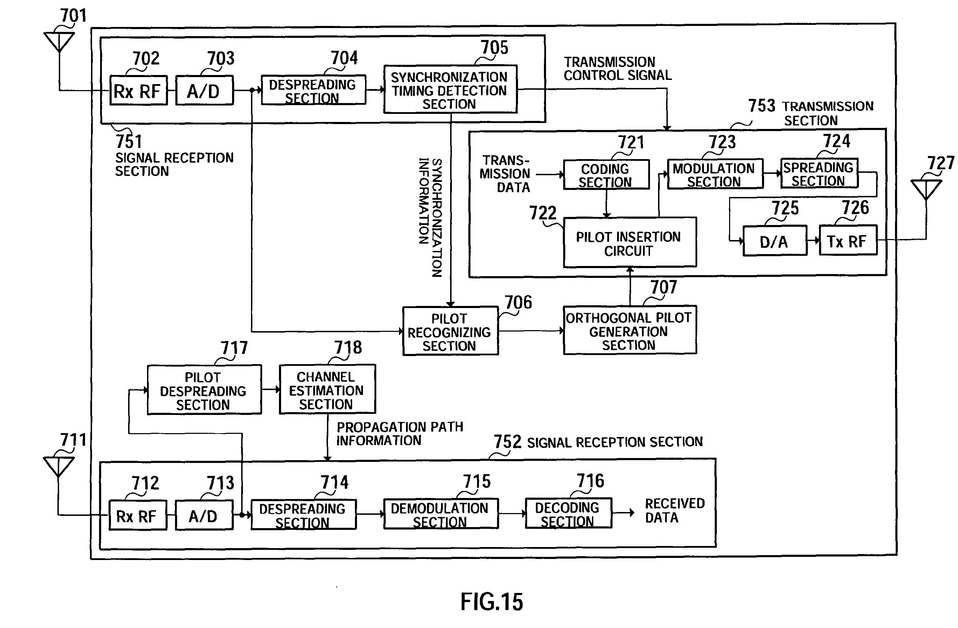

FIG.15 is a block diagram illustrating an example of a configuration of a wireless LAN access point apparatus according to Embodiment 7 of the present invention.

An internal configuration of the access point apparatus shown in FIG.15 is roughly divided into a signal reception section 751 that applies reception processing to a signal sent from a cellular scheme base station, a signal reception section 752 that applies reception processing to a signal sent from a mobile communication terminal and a transmission section 753 that performs processing of sending transmission data to the mobile communication terminal.

In the signal reception section 751, the radio reception (Rx RF) section 702 applies predetermined radio processing such as down-conversion to a signal received by an antenna 701 and outputs the signal to an A/D conversion section 703.

The A/D conversion section 703 applies A/D conversion processing to the received signal output from the radio reception section 702 and outputs the received signal to a despreading section 704 and a pilot recognizing section 706.

The despreading section 704 multiplies the signal output from the A/D conversion section 703 by a predetermined despreading code to apply despreading processing to the received signal and outputs the signal to a synchronization timing detection section 705.

The synchronization timing detection section 705 detects the synchronization timing of a cellular scheme downlink signal from the output of the despreading section 704, outputs the synchronization information to the pilot recognizing section 706 and outputs a transmission control signal to the transmission section.

In the signal reception section 752, a signal received from an antenna 711 is subjected to processing similar to that of the signal reception section 751 through a radio reception section 712, an A/D conversion section 713 and a despreading section 714 and output to a demodulation section 715.

The demodulation section 715 applies demodulation processing to the signal output from the despreading section 714 and outputs the demodulated signal to a decoding section 716.

The decoding section 716 applies decoding processing to the demodulated data output from the demodulation section 715 to obtain received data.

A pilot despreading section 717 and channel estimation section 718 perform channel estimation on the received signal in the same way as the communication terminal apparatus shown in FIG.12.

A pilot recognizing section 706 recognizes pilots used in the cellular scheme from the signal output from the A/D conversion section 703 and outputs the decision result to an orthogonal pilot generation section 707.

The orthogonal pilot generation section 707 generates pilots orthogonal to the pilots decided at the pilot recognizing section 706 and outputs the orthogonal pilots to a pilot insertion circuit 722.

In the transmission section 753, a coding section 721 codes transmission data. The pilot insertion circuit 722 inserts the pilot output from the orthogonal pilot generation section 707 into transmission data. A modulation section 723 applies modulation processing to the transmission signal into which the pilot has been inserted. A spreading section 724 applies spreading processing to the transmission signal. A D/A conversion section 725 applies D/A conversion to the transmission signal. A radio transmission (Tx RF) section 726 applies predetermined radio processing such as up-conversion and sends the transmission data from an antenna 727. Here, the transmission timing follows the instruction of the aforementioned transmission control signal.

Then, the operation of the access point apparatus in the above described configuration will be explained.

The base station of the hot spot communication system detects a pilot signal sent from the cellular scheme base station, generates and sends a pilot signal in such a way as to be orthogonal to the pilot signal of the cellular scheme communication system.

The base station of the hot spot communication system detects a signal sent from the base station of the cellular scheme communication system and synchronizes the signal timing from the cellular scheme communication systemwith the downlink transmission timing. That is, it compensates for a delay time difference at the mobile communication terminal.

Thus, according to this embodiment, pilots of the two communication systems are orthogonal to each other, and therefore the mobile communication terminal can easily estimate a propagation path for each base station transmission antenna of each communication system. Furthermore, a signal from each communication system is received by the mobile communication terminal in a synchronized state, and therefore it is possible to optimize an operation interval during MIMO reception processing. This alleviates the processing load on the mobile communication terminal.

### (Embodiment 8)

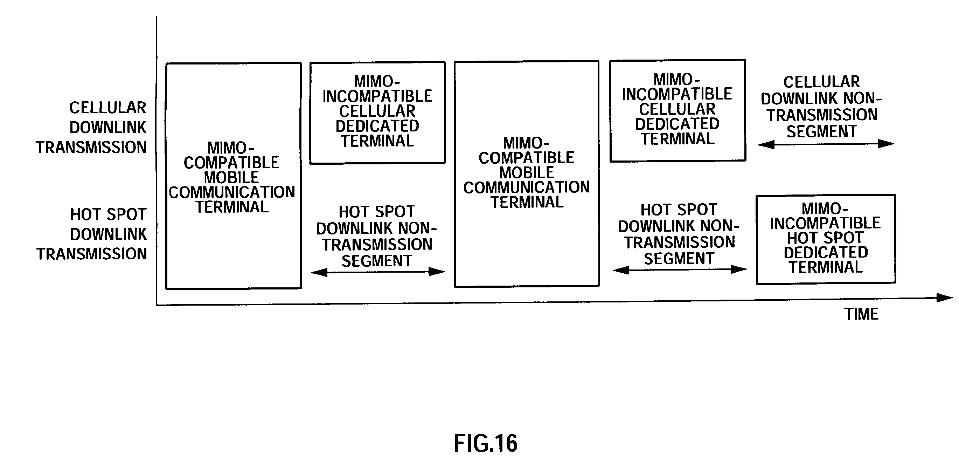

FIG.16 illustrates a signal configuration in the wireless communication system according to Embodiment 8.

A feature of this embodiment is the ability to handle a case where a mobile communication terminal which can only communicate with a cellular scheme communication system and which does not support MIMO reception processing enters a service area of a hot spot communication system.

Scheduling for transmission processing when an MIMO-incompatible terminal exists in a hot spot service area will be explained. In this case, the MIMO-incompatible terminal cannot separate a cellular scheme signal from a hot spot signal. Therefore, as shown in FIG.16, a communication of the MIMO-incompatible terminal is carried out using a non-transmission segment of either communication system.

At this time, when a downlink transmission from the base station of the cellular scheme communication system to the mobile communication terminal is carried out, the signal is time-shared to secure channels periodically. The base station of the hot spot communication system performs scheduling that avoids downlink signal transmission for a period during which the mobile communication terminal receives the downlink signal from the cellular scheme communication system.

Here, the base station performs scheduling that guarantees the mobile communication which does not support MIMO reception processing only a communication at a minimum transmission rate allowed by the communication system and gives priority to the MIMO terminal. On the contrary, when the mobile communication terminal is a terminal incapable of MIMO reception which can only communicate with the hot spot communication system, a downlink communication of the communication terminal is assigned to the downlink non-transmission segment of the cellular scheme communication system.

Thus, according to this embodiment, even if MIMO-compatible terminal and MIMO-incompatible terminal are mixed, it is possible to operate the wireless communication system through appropriate scheduling and separate signals of the two communication systems on the time axis and thereby prevent interference between communication signals.

### (Embodiment 9)

A wireless communication system according to Embodiment 9 of the present invention is a communication system in which a downlink transmission signal of a cellular scheme communication system and downlink signal of a hot spot communication system such as an ultra-high-speed wireless LAN operated at the same frequency are multicarrier transmission such as OFDM.

A feature of this embodiment is that it adopts a method of arranging subcarriers in an OFDM communication at different locations according to the communication system used and thereby facilitates separation of the subcarriers.

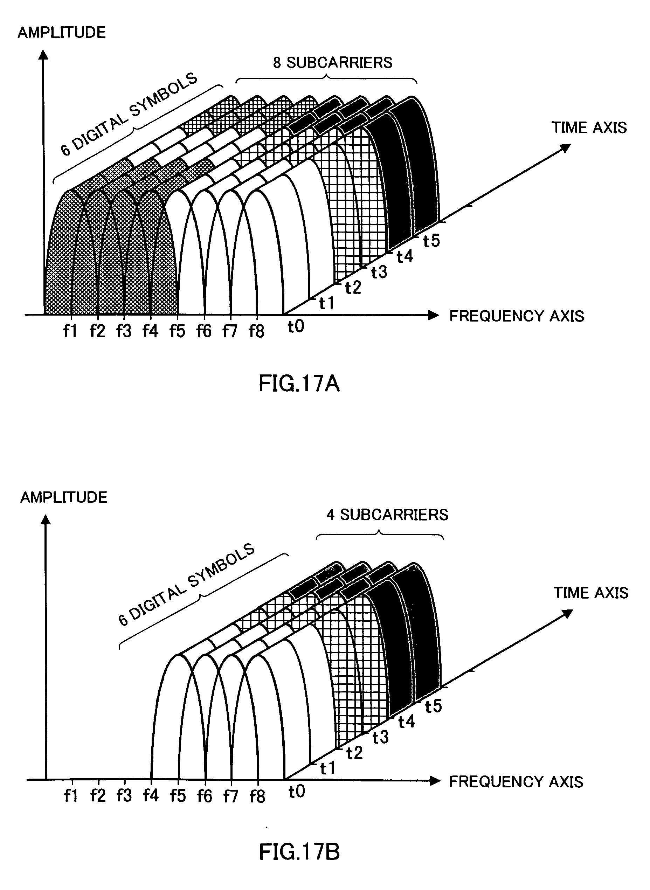

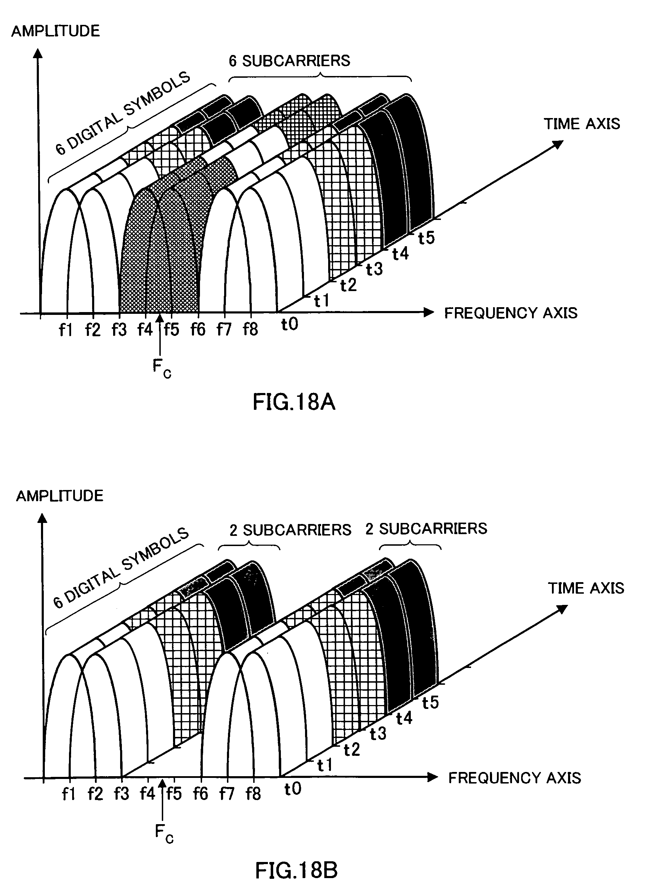

FIG.17A, B and FIG.18A, B illustrate an example of separate arrangement of subcarrier signals used in a wireless communication system according to Embodiment 6 of the present invention. FIG.17A and FIG.18A show subcarrier signals used by a cellular scheme wireless communication system and FIG.17B and FIG.18B show subcarrier signals used by a wireless LAN scheme wireless communication system.

Here, the two communication systems use the same frequency band. However, a group of subcarriers carrying signals of users who perform MIMO transmission and a group of subcarriers carrying signals of users who perform only cellular transmission are arranged separate from each other on the frequency axis.

In FIG.17A, 8 subcarrier signals are transmitted through cellular scheme downlink channels and 4 subcarrier signals are transmitted through wireless LAN downlink channels.

At this time, subcarriers with central frequencies f1 to f4 are assigned to users who are carrying out only cellular scheme communication. Furthermore, subcarriers with central frequencies f5 to f8 are assigned to users who are carrying out MIMO communication.

Because of this, the users who are only carrying out cellular scheme communication need not carry out FFT on the subcarriers within the range of central frequencies f1 to f8 and only need to carry out FFT on the subcarriers within the range of central frequencies f1 to f4.

On the contrary, users who are carrying out MIMO communication only need to carry out FFT on the subcarriers within the range of central frequencies f5 to f8. If FFT is carried out within the range of f1 to f8 without performing the above described separation, a greater circuit scale is required.

More preferably, frame synchronization is established with a delay time difference compensated between the two systems and separation by user is also performed in the time axis direction of MIMO transmission.

In FIG. 17A and FIG. 17B, different users are assigned to segments of time t0 to t2, t2 to t4 and t4 to t6. In the figure, different users are expressed by different types of shading.

Furthermore, as shown in FIG. 18A and FIG. 18B, a guard band (positions of frequencies f3 and f6) is provided between the cellular and wireless LAN subcarriers, which facilitates the cutting of only subcarriers with desired frequencies when subcarriers in either system are extracted through a filter.

With regard to an MIMO-incompatible terminal, Embodiment 5 has explained the method of avoiding mutual interference by time sharing, but as in this embodiment, a method of performing separation on the frequency axis is also available.

Furthermore, by arranging the cellular subcarriers inside (f4, f5) andwireless LAN subcarriers outside (f1, f2, f7, f8) using the same central frequency (Fc) within the ranges of FFT calculation of the cellular and wireless LAN, it is possible to have common local frequencies. That is, it is possible to use different sampling rates such that sampling is normally performed at a low sampling rate (range from f3 to f6) and sampling is performed at an increased sampling rate (in the entire range) when the terminal enters a hot spot. When the sampling rate is low, power consumption of the circuit can also be reduced.

Thus, according to this embodiment, separate arrangement of subcarriers in an OFDM communication makes it possible to narrow the range of FFT at a mobile radio terminal, reduce the circuit scale and reduce power consumption.

As described above, the present invention can prevent handover processing from frequently occurring even when a mobile station is located close to the end of a wireless LAN area. Furthermore, when the mobile station crosses the end of the area, the present invention can prevent delays in data transmission. It can further prevent interruption of a received image the moment the mobile station goes out of the area of the wireless LAN and allows the user to continue seamless communication.

The present invention can also reduce the circuit scale and load on the communication system and improve the frequency utilization efficiency.

This application is based on the Japanese Patent Application No.2002-160611 filed on May 31, 2002 and the Japanese Patent Application No.2002-286007 filed on September 30, 2002, entire content of which is expressly incorporated by reference herein.

### Industrial Applicability

The present invention is applicable to a communication system which integrates a cellular system, wireless LAN system, etc.

## Claims

1. A data allocation apparatus comprising:
an acquisition section that acquires data to be sent to a communication terminal capable of simultaneously receiving data from first and second communication systems independent of each other from any system other than said first and second communication systems; and
an allocation section that allocates, of the data acquired, the data which matches the characteristic of said first communication system to said first communication system and allocates the data which matches the characteristic of said second communication system to said second communication system.

2. The data allocation apparatus according to claim 1,
whereinsaidallocationsectionallocatesimportant or highly urgent data out of the data acquired by said acquisition section to both said first and second communication systems.

3. The data allocation apparatus according to claim 1,
wherein the area coveredby said first communication system includes the area covered by said second communication system,
said acquisition section acquires moving data sent to said communication terminal, and
said allocation section allocates first data in which one image is formed of one frame out of the moving image data acquired to said first communication system and allocates differential data of said first data to said second communication system.

4. The data allocation apparatus according to claim 1,
wherein the area covered by said first communication system includes the area covered by said second communication system,
said acquisition section acquires image data sent to said communication terminal, and
said allocation section allocates first image data which forms an image with predetermined resolution with a predetermined amount of data out of the image data acquired to said first communication system and allocates second image data which is combined with said first image data, with the resolution of the combined image exceeding the resolution of said first image data, to said second communication system.

5. The data allocation apparatus according to claim 1,
wherein the area covered by said first communication system includes the area covered by said second communication system,
said acquisition section acquires real-time data sent to said communication terminal and retransmission data which is part of said real-time data to be retransmitted, and
said allocation section allocates said real-time data to said first communication system and allocates said retransmission data to said second communication system.

6. The data allocation apparatus according to claim 1,
wherein said allocation section allocates the data acquired by said acquisition section according to transmission rates of said first and second communication systems.

7. The data allocation apparatus according to claim 1,
wherein the transmission rate of said first communication system is smaller than the transmission rate of said second communication system,
the area covered by said first communication system includes the area covered by said second communication system,
said acquisition section acquires data common to the plurality of said communication terminals and data dedicated to the plurality of said communication terminal, and
said allocation section allocates said dedicated data to said first communication system and allocates said common data to said second communication system.

8. The data allocation apparatus according to claim 1,
wherein the transmission rate of said first communication system is smaller than the transmission rate of said second communication system,
said acquisition section acquires initial transmission data to be transmitted to said communication terminal for the first time and retransmission data which is part of said initial transmission data to be retransmitted, and
said allocation section allocates said retransmission data to said first communication system and allocates said initial transmission data to said second communication system.

9. The data allocation apparatus according to claim 1,
wherein the transmission rate of said first communication system is smaller than the transmission rate of said second communication system,
the area covered by said first communication system includes the area covered by said second communication system, and
said allocation section allocates at least part of control information on said second communication system out of the data acquired by said acquisition section to said first communication system.

10. The data allocation apparatus according to claim 1,
wherein the transmission rate of said first communication system is smaller than the transmission rate of said second communication system,
the area covered by said first communication system includes the area covered by said second communication system,
said acquisition section acquires encrypted data to be transmitted to said communication terminal and part of a key for decoding said encrypted data, and
said allocation section allocates said encrypted data to said first communication system and allocates part of said key to said second communication system.

11. A transmission method comprising:
a first allocating step of allocating, of data to be transmitted to a first communication terminal capable of simultaneously receiving a first and second communication systems independent of each other, the data which matches the characteristic of said first communication system to said first communication system;
a second allocating step of allocating, of the data to be transmitted to said first communication terminal, the data which matches the characteristic of said second communicationsystemtosaidsecondcommunicationsystem; and
a transmitting step of transmitting the data allocated to said first and second communication systems.

12. The transmission method according to claim 11, wherein in said transmitting step,
the data to be transmitted to a second communication terminal capable of receiving data of either said first or second communication system and the data to be transmitted to said first communication terminal are arranged time-shared on the time axis, and
a minimum allowable transmission rate is allocated to the data to be transmitted to said second communication terminal to thereby transmit the data to be transmitted to said first communication terminal with higher priority.

13. The transmission method according to claim 11, wherein in said transmitting step,
the data to be transmitted to a second communication terminal capable of receiving data of either said first or second communication system and the data to be transmitted to said first communication terminal are arranged divided on the frequency axis and transmitted.

14. The transmission method according to claim 13, wherein in said transmitting step,
transmission timings of data to be transmitted to said first and second communication terminals are synchronized and the data to be transmitted to said first and second communication terminals are arranged time-shared on the time axis and transmitted.

15. The transmission method according to claim 13, wherein in said transmitting step,
the data to be transmitted to said first and second communication terminals is transformed to multicarrier data having the same central frequency of a Fourier transform, with the data to be transmitted to said first communication terminal arranged outside the data to be transmitted to said second communication terminal on the frequency axis and then transmitted.

16. A wireless communication system comprising:
the data allocation apparatus according to claim 1;
a first transmission section that transmits data allocated by said data allocation apparatus to said first communication system to said communication terminal by radio; and
a second transmission section that transmits data allocated by said data allocation apparatus to said second communication system to said communication terminal by radio.

17. The wireless communication system according to claim 16,
wherein said second transmission section orthogonalizes the signal to be transmitted to said communication terminal by radio to the signal transmitted by radio by said first transmission section.

18. The wireless communication system according to claim 16,
wherein said second transmission section adjusts the transmission timing of the signal to be transmitted to said communication terminal by radio so that the signals transmitted by radio by said first and second transmission sections are received synchronized by said communication terminal.

19. A communication terminal apparatus used in the wireless communication system according to claim 16,
wherein the area covered by said first communication system includes the area covered by said second communication system, and
said communication terminal apparatus comprises a reception section that receives a signal transmitted by radio from said first transmission section regardless of whether said communication terminal apparatus is located in the area covered by said first communication system or in the area covered by said second communication system.

20. The communication terminal apparatus according to claim 19, further comprising:
a detection section that detects a channel capacity of said second communication system; and
a requesting section that sends a connection request to said second communication system based on the detected channel capacity,
wherein when the detected channel capacity is equal to or below a threshold, said requesting section sends no connection request to said second communication system.

21. A communication terminal apparatus used in the wireless communication system according to claim 16, comprising:
a first reception section that receives signals transmitted by radio from both said first and second transmission sections using the same frequency; and
a separating section that separates the signal received by said first reception section using an MIMO technology.

22. The communication terminal apparatus according to claim 19, further comprising:
a second reception section that receives with diversity a signal transmitted by radio from either said first or second transmission section; and
a selection section that selects a reception section to be used from said first and second reception sections depending on whether the communication terminal apparatus is located in the area covered by said first communication system or in the area covered by said second communication system.

23. The communication terminal apparatus according to claim 19, further comprising:
a calculation section that calculates a power difference between signals transmitted by radio from said first and second transmission sections; and
a notification section that notifies signals of transmit power control in the direction in which the calculated power difference is decreased to said first and second transmission sections.
